## Europäisches Patentamt

## European Patent Office

## Office européen des brevets

(11) Veröffentlichungsnummer: **0 016 412**
**B1**

(19)

(12) # EUROPÄISCHE PATENTSCHRIFT

(45) Veröffentlichungstag der Patentschrift:
28.09.83

(51) Int. Cl.³: **F 16 K 31/363**

(21) Anmeldenummer: **80101278.2**

(22) Anmeldetag: **12.03.80**

(54) **Druckluftbetätigtes Ventil.**

(30) Priorität: **19.03.79 DE 2910752**

(43) Veröffentlichungstag der Anmeldung:
**01.10.80 Patentblatt 80/20**

(45) Bekanntmachung des Hinweises auf die Patenterteilung:
**28.09.83 Patentblatt 83/39**

(84) Benannte Vertragsstaaten:
**BE FR GB NL**

(56) Entgegenhaltungen:
**AT-B-262 705**
**CH-A-504 639**
**FR-A-1 150 454**
**US-A-2 916 051**
**US-A-3 805 837**

(73) Patentinhaber: **SIEMENS AKTIENGESELLSCHAFT,
Berlin und München Wittelsbacherplatz 2,
D-8000 München 2 (DE)**

(72) Erfinder: **Heyneman, Guido, Ing.grad., 8-Meilaan 48,
B-8300 Knokke (BE)**

BUNDESDRUCKEREI BERLIN

Druckluftbetätigtes Ventil

Die Erfindung bezieht sich auf ein druckluftbetätigtes Ventil für den Anbau an Geräte zur chemischen Analyse, bei dem zwei Kolben einen in Druckrichtung angeordneten Schieber betätigen, welcher auf einer Druckplatte gleitet, die mit annähernd senkrecht zur Gleitfläche verlaufenden Bohrungen versehen ist, welche schieberseitig untereinander mit wenigstens einer entsprechend angeordneten Nut im Schieber verbindbar sind und auf der anderen Seite im Ein- oder Auslaßstutzen in Verbindung stehen, und wobei die Bohrungen in der Druckplatte an der dem Schieber angewandten Seite über eine Dichtung mit Bohrungen für die Außenanschlüsse im Gehäuse in Verbindung stehen, und bei dem zu beiden Seiten des Schiebers die Kolben mit unterschiedlichen Durchmessern angeordnet sind, wobei der Kolben mit dem geringeren Durchmesser ständig mit Druckluft aus einer Druckluftanlage beaufschlagt ist, während der Kolben mit dem größeren Durchmesser zur Steuerung der Schieberbewegung über ein vorzugsweise druckluftbetätigtes Steuerventil mit der Druckluftanlage in Verbindung steht.

Ein druckluftbetätigtes Ventil dieser Art ist durch den CH-A-504 639 bekanntgeworden. Bei diesem bekannten druckluftbetätigten Ventil sind in einer Grundplatte ein Zulauf, zwei Verbraucheranschlüsse und zwei Rücklaufkanäle ausgebildet. Diese Anschlüsse stehen über relativ lange Bohrungen mit dem Steuerschieber in Verbindung. Für den An- oder Zusammenbau derartiger druckluftbetätigter Ventile mit anderen Geräten, wie Pumpen, Gefäßen und dergl. ist es erforderlich, daß sie ein möglichst geringes Totvolumen aufweisen.

Der Erfindung liegt die Aufgabe zugrunde, ein druckluftbetätigtes Ventil der eingangs beschriebenen Art derart auszubilden, daß bei einem An- oder Zusammenbau mit anderen Geräten ein möglichst geringers Totvolumen entsteht. Diese Aufgabe wird mit dem druckluftbetätigten Ventil gemäß der Erfindung dadurch erreicht, daß mindestens eine für die Außenanschlüsse vorgesehene Bohrung zum unmittelbaren Anschluß eines Gefäßes geeignet ist, wobei diese Bohrung von einer konzentrisch angeordneten Nut umgeben ist, in die ein das aufgesetzte Gefäß abdichtender Dichtungsring eingelegt ist.

Weitere Einzelheiten und Merkmale ergeben sich aus den übrigen Unterlagen.

Anhand der Zeichnung, in der mehrere Ausführungsbeispiele dargestellt sind, wird die Erfindung näher erläutert. Es zeigt

Fig. 1 eine Schnittansicht nach der Linie I-I der Fig. 3,

Fig. 2 eine Seitenansicht,

Fig. 3 eine Ansicht von oben ohne Deckel und

Fig. 4 eine Schnittansicht nach der Linie II-II der Fig. 1,

Fig. 5 die Verwendung des Ventils als Ablaufventil im Schnitt und

Fig. 6 eine Seitenansicht desselben mit angebautem Rührmotor,

Fig. 7 bis 9 verschiedene Ausführungen der Druckplatte mit Nuten des Schiebers.

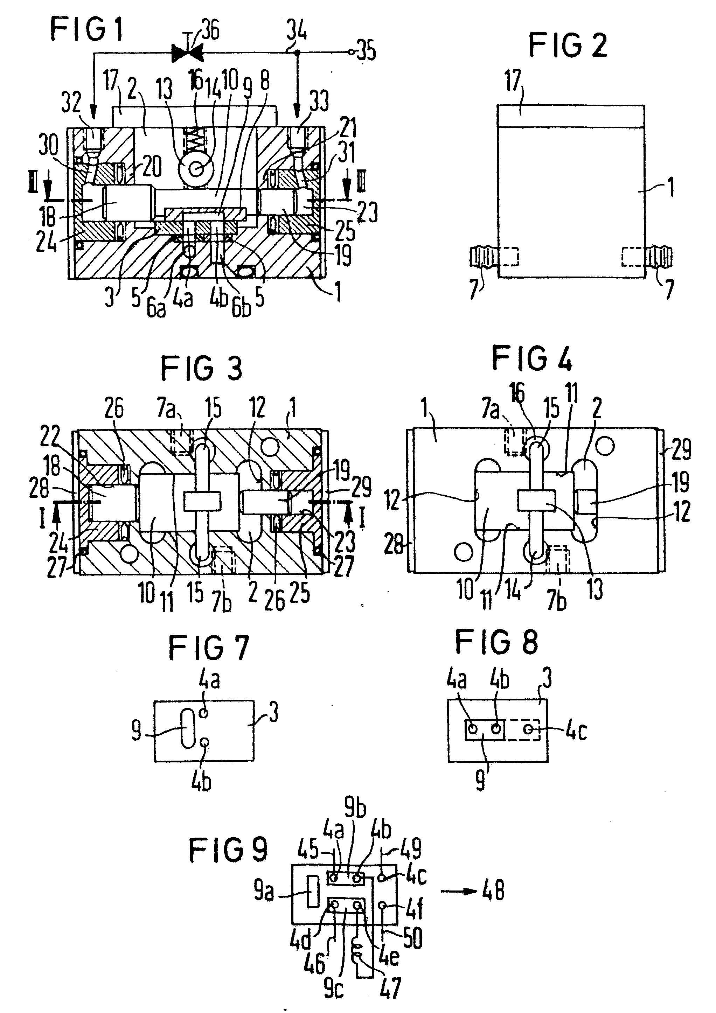

Wie Fig. 1 zeigt, ist in einem prismatischen Gehäuse 1 (Ventilblock) am Grunde einer Kammer 2 eine als Druckplatte 3 ausgebildete Unterlage eingelegt. Die Druckplatte 3 weist zwei in horizontaler Richtung verlaufende Bohrungen 4a und 4b auf, die über Ringdichtungen 5 mit im Gehäuse 1 versehenen Bohrungen 6a und 6b fluchten und die über Anschlußbohrungen 7a und 7b (Fig. 2 und 4) für den Anschluß der zu steuernden Leitungen versehen sind. Auf der Druckplatte 3 beweglich ist ein Schieber 8, der an der Druckplatte 3 zugekehrten Seite eine Längsnut 9 aufweist, die die Bohrungen 4a und 4b in der in Fig. 1 dargestellten Stellung des Schiebers 8 verbindet. Der Schieber 8 ist in einem Schiebehalter 10 untergebracht, der eine prismatische Form aufweist. Der Schieberhalter 10 ist durch Seitenwände 11 im Gehäuse 1 geführt und seine axiale Beweglichkeit durch die beiden Stirnflächen 12 der Kammer 2 begrenzt. Mit dem Schieberhalter 10 wirkt ein Kugellager 13 zusammen, welches mit Hilfe einer Welle 14 in senkrechter Richtung fixiert ist. Die Enden der Welle 14 enden in Bohrungen (Fig. 3 und 4) 15, in die Druckfedern 16 gemäß Fig. 1 eingesetzt sind. Ihr Widerlager finden die Druckfedern 16 in einem aufschraubbaren Deckel 17, der vorzugsweise aus Plexiglas besteht. Bei aufgeschraubtem Deckel 17 werden die Federn 16 zusammengedrückt so daß über die Welle 14 das Kugellager 13 gegen die Oberseite des Schieberhalters 10 gedrückt wird. Der Druck ist hierbei so bemessen, daß der Schieber 8 vollständig dicht auf der Druckplatte 3 anliegt. In entsprechender Weise müssen die zusammenwirkenden Flächen bearbeitet, insbesondere poliert sein.

Die Betätigung des Schiebers 8 bzw. Schieberhalters 10 erfolgt durch zwei zu beiden Seiten angeordnete Kolben 18 und 19, wobei der Kolben 18 einen größeren Durchmesser aufweist, als der Kolben 19. Die Kolben 18 und 19 sind in entsprechenden Bohrungen der Zwischenwände 20 und 21 des Gehäuses 1 sowie in zylindrischen Ausnehmungen 22 und 23 von Deckeln 24 und 25 geführt. Mit Hilfe von Dichtungsringen 26 und 27 sind die Deckel 24 und 25 einerseits gegen die Kolben 18 und 19 und andererseits gegen das Gehäuse 1 abgedichtet. Mit Hilfe von zusätzlichen Abdeckplatten 28 und 29 werden die Deckel 24 und 25 gehalten. Bohrungen 30 und 31 in den Deckeln 24 und 25 stehen mit Anschlußbohrungen 32 und 33 für eine Druckluftleitung 34 in Verbindung, welche mit einer Versorgungsleitung 35 verbunden ist. Während die Druckluftleitung 34 unmittelbar über Anschlußbohrung 33, Bohrung 31 mit der Bohrung 23 im Deckel 25 in Verbindung steht, ist in der Verbindung zur Anschlußbohrung 32 zur Druckluftversorgung der zylindrischen Ausnehmung 22 im Deckel 24 ein steuerbares Ventil 36 angeschlossen. Die ständig unter Druckluft stehende Leitung 34 bewirkt bei geschlossenem Ventil 36, daß der Kolben 19 in Bezug auf Fig. 1, 3 und 4 nach links bewegt wird, und zwar so weit, bis der Schieberhalter 10 durch die Stirnfläche 12 angehalten wird, wie Fig. 3 und 4 zeigen. In diesem Falle steht die Längsnut 9 im Schieber 8 nur über der linken Bohrung 4a, während die Bohrung 4b verschlossen bleibt. Die zylindrische Ausnehmung 22 ist hierbei entlüftet.

Wird nun das Ventil 36 geöffnet, so wird die zylindrische Ausnehmung 22 unter Druck gesetzt, und da die wirksame Fläche des Kolbens 18 praktisch doppelt so groß ist, wie die wirksame Fläche des Kolbens 19 wird der Schieberhalter 10 unter Mitnahme des Schiebers 18 und Überwindung der Kraft des Kolbens 19 nach rechts gemäß Fig. 1 bewegt. Die Längsnut 9 verbindet dann die beiden Bohrungen 4a und 4b miteinander. Diese Schieberstellung ist in Fig. 1 dargestellt.

Wird andererseits das Ventil 36 wiederum geschlossen bzw. die zylindrische Ausnehmung 22 entlüftet, so kehrt der Schieberhalter 10 mit Schieber 8 unter der Wirkung des ständig mit Druckluft beaufschlagten Kolbens 19 in die zuvor beschriebene Stellung zurück. Der Schaltzustand des Ventils 36 gibt unmittelbar Auskunft über die Stellung des Schiebers 8 bzw. den Zustand des Ventils.

Die Bohrungen 30 und 31 in den Deckeln 24 und 25 können im Inneren der zylindrischen Ausnehmungen 22 und 23 in eine Ringnut münden, so daß mit Sicherheit die Druckluft an den Kolbenflächen wirksam werden kann. Bei dem Ausführungsbeispiel nach Fig. 1 bis 3 sind die beiden Bohrungen 6a, 6b über Anschlußbohrungen 7a und 7b zu beiden Seiten des Gehäuses 1 herausgeführt.

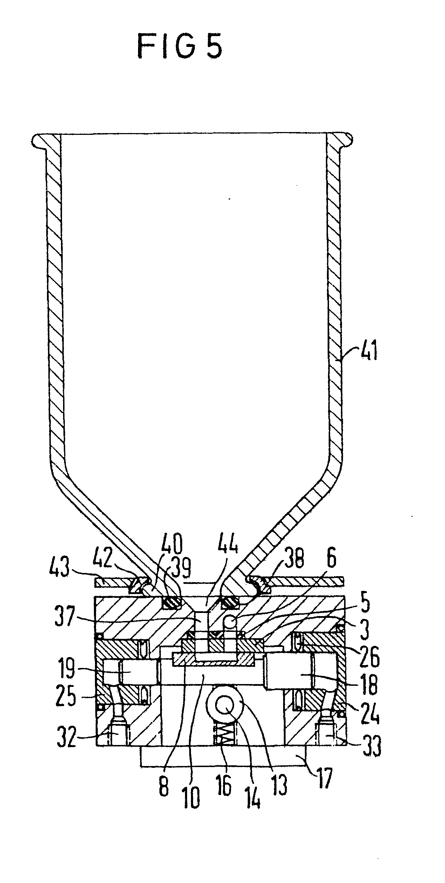

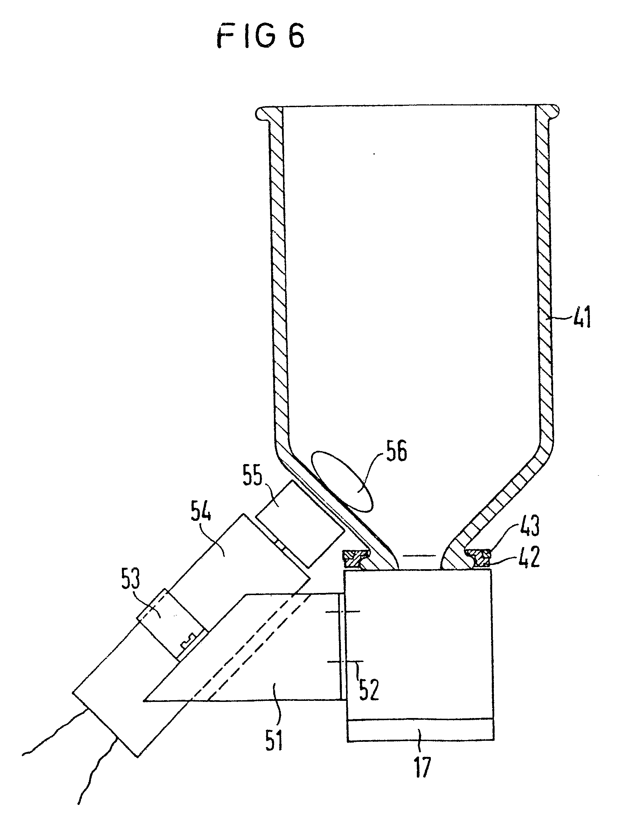

Das erfindungsgemäße Ventil ist besonders geeignet zum Anbau an Geräte für die chemische Analyse, wie Fig. 5 und 6 zeigen. Fig. 5 zeigt die Anwendung des erfindungsgemäßen Ventils als Ablaufventils für ein Misch- oder Titrationsgefäß oder dgl. In diesem Falle ist die eine Bohrung 6a gemäß Fig. 1 über eine Bohrung 37 senkrecht nach oben geführt. Damit das Ventil dicht mit einem Gefäß 41 verbunden werden kann, ist konzentrisch zur Bohrung 37 eine Ringnut 38 für einen O-Ring 39 vorgesehen, auf welchem dann das mit einem Wulstrand 40 versehene Gefäß 41 aufgesetzt werden kann. Mit Hilfe eines im Querschnitt Z-förmigen elastischen Ringes 42 und einer mit einer entsprechenden Ausnehmung versehenen Deckelplatte 43 kann das Gefäß 41 mit Hilfe von Schrauben auf dem Gehäuse 1 des Ventiles befestigt werden. Das Gefäß 41 kann ein Mischgefäß, ein Aufnahmegefäß, ein Titrationsgefäß oder dgl. sein. Im letzteren Falle ist das Gefäß 41 oben dicht verschlossen, wobei durch seinen Deckel dann die entsprechenden Elektroden eingeführt sein können. Von dem in den Fig. 1 bis 4 dargestellten Ausführungsbeispiel unterscheidet sich das Ausführungsbeispiel nach Fig. 5 lediglich darin, daß die eine Bohrung 37 senkrecht nach oben geführt ist, trichterförmig endet und mit einer dazu konzentrisch angeordneten Nut 38 versehen ist. Anstelle der trichterförmigen Erweiterung 44 kann selbstverständlich auch ein anderer Anschluß vorgesehen sein.

Bei den bisherigen Ausführungsbeispielen weist der Schieber 8 eine Längsnut 9 auf und die beiden Bohrungen 4a und 4b in der Druckplatte 3 sind in Schieberichtung hintereinander angeordnet. Die beiden Bohrungen 4a und 4b können auch quer zur Schieberichtung angeordnet sein, wie Fig. 7 zeigt. In diesem Falle ist dann die Nut 9 im Schieber 8 nicht in Längsrichtung, sondern quer dazu angeordnet. Diese Anordnung hat den Vorteil, daß das Totvolumen noch mehr begrenzt sein kann. Fig. 7 zeigt die Schieberstellung bei geschlossenem Ventil entsprechend der Schieberstellung in Fig. 3 und 4. Bei geöffnetem Ventil verbindet die Quernut 9 die beiden Bohrungen 4a und 4b. Wird die Quernut 9 im Schieber asymmetrisch angeordnet, so können durch um 180° versetztes Einsetzen des Schiebers 8 im Schieberhalter 10 in der Ausgangsstellung die beiden Bohrungen 4a und 4b miteinander verbunden sein.

Fig. 8 zeigt eine Anordnung, bei der die Druckplatte 3 drei hintereinander liegende Bohrungen 4a, 4b und 4c aufweist, die wahlweise durch die im Schieber 8 vorgesehene Längsnut 9 miteinander verbunden werden können. In der anderen Schieberstellung ist die Längsnut mit einer gestrichelten Linie angedeutet. Die Bohrungen 4a bis 4c können auch quer zur Schieberbewegung angeordnet sein. Der Schieber kann dann zwei versetzt angeordnete Quernuten aufweisen, wobei in der einen Schieberstellung die Bohrungen paarweise zusammengefaßt werden. Dieses Ventil ist besonders geeignet in Verbindung mit einer Spritze.

Fig. 9 zeigt ein Ausführungsbeispiel eines Ventils, wie es beispielsweise bei Probennahmegeräten bei Titrieranlagen Verwendung finden kann. Die Druckplatte ist wiederum mit 3 bezeichnet, weist jedoch sechs Bohrungen 4a bis 4f, die durch drei Nuten 9a bis 9c im Schieber 8 teilweise miteinander verbindbar sind. Sämtliche Bohrungen 4a bis 4f sind mit entsprechenden Anschlußstücken versehen, wobei beispielsweise die den Bohrungen 4a und 4d entsprechenden Leitungen 45 und 46 mit einem Elektrolysebad in Verbindung stehen können aus dem mit Hilfe einer Probenentnahmeschleife 47 eine genau dosierte Menge der Probe entnommen werden kann. Zu diesem Zweck ist die Meßschleife 47 mit den Bohrungen 4b und 4e verbunden. In der in Fig. 8 gezeigten Stellung kann also Badflüssigkeit über Anschlußleitung 45 Nut 9b im Schieber, Bohrung 4b, Meßschleife 47, Bohrung 4e, Längsnut 9c, Bohrung 4d und Leitung 46 entnommen werden. Wird nun bei gefüllter Meßschleife 47 der Schieber in

Pfeilrichtung 48 bewegt, so gelangt die Nut 9b über die Öffnungen 4b und 4c, die Nut 9c verbindet die Öffnungen 4e und 4f und die Quernut 9a verbindet die Öffnungen 4a und 4d. In der genannten Schieberstellung wird also über die Leitungen 45 und 46 sowie Nut 9a durch das Ventil ständig neue Probe durchgeschickt. Andererseits kann die in der Meßschleife 47 befindliche Flüssigkeit nun an die Leitungen 49 und 50 abgegeben werden, was beispielsweise mit einer Dosierspritze erfolgen kann, die der Probe ein bestimmtes Quantum Wasser beimischt. Der auf diese Weise gebildete Weg entsteht vom Anschluß 50 über Bohrung 4f, Längsnut 9c, Bohrung 4e, Meßschleife 47, Bohrung 4b, Längsnut 9b, Bohrung 4c und Leitung 49. Die Probenentnahme mit Hilfe von destilliertem Wasser hat noch den Vorteil, daß auf diese Weise die Meßschleife 47 gereinigt wird.

Wie die Beispiele Fig. 7 bis 9 zeigen, können praktisch beliebig viele zu verbindende Anschlüsse vorgesehen sein, wobei die Anzahl dem erforderlichen Bedarf entspricht. Die Bohrungen können nicht nur in Bewegungsrichtung des Schiebers 8, sondern auch quer dazu und auch kombiniert, wie Fig. 9 zeigt, angeordnet sein.

Die prismatische Ausführung des erfindungsgemäßen Ventils hat zudem noch den Vorteil, daß auf einfache Weise auch ein Rührmotor angebracht werden kann, wie Fig. 6 zeigt, und zwar mit Hilfe der beiden Arme 51, die bei 52 angeschraubt werden können. Mit Hilfe einer Schelle 53 ist ein Rührmotor 54 befestigt, der einen Permanentmagnet 55 antreibt, der durch die Wandung des Behälters 41 wirkt und einen ferromagnetischen Teil 56 antreibt.

Durch den Deckel 17 kann die Kammer 2 unter Verwendung einer Dichtung vollkommen dicht eingekapselt werden. Unter Umständen können sich in der Kammer 2 aggressive Gase oder Dämpfe bilden oder an den Dichtungsflächen Kristalle bilden. In diesem Falle ist es zweckmäßig, daß die Kammer 2 durch Entlüftungsbohrungen mit der Außenseite verbunden ist. Fallweise ist es zweckmäßig Luft oder Wasser zur Auflösung eventuell sich gebildeter Krisralle durchströmen zu lassen. Hierzu kann die bei der Betätigung freiwerdende Luft verwendet werden.

**Patentansprüche**

1. Druckluftbetätigtes Ventil für den Anbau an Geräte zur chemischen Analyse, bei dem zwei Kolben (18, 19) einen in Druckrichtung angeordneten Schieber (8) betätigen, welcher auf einer Druckplatte (3) gleitet, die mit annähernd senkrecht zur Gleitfläche verlaufenden Bohrungen (4a, 4b) versehen ist, welche schieberseitig untereinander mit wenigstens einer entsprechend angeordneten Nut (9) im Schieber (8) verbindbar sind und auf der anderen Seite mit Ein- oder Auslaßstutzen (7) in Verbindung stehen, und wobei die Bohrungen (4a, 4b) in der Druckplatte (3) an der dem Schieber abgewandten Seite über eine Dichtung (5) mit Bohrungen für die Außenanschlüsse im Gehäuse in Verbindung stehen, und bei dem zu beiden Seiten des Schiebers (8) die Kolben (18, 19) mit unterschiedlichen Durchmessern angeordnet sind, wobei der Kolben (19) mit dem geringeren Durchmesser ständig mit Druckluft aus einer Druckluftanlage (35) beaufschlagt ist, während der Kolben (18) mit dem größeren Durchmesser zur Steuerung der Schieberbewegung über ein vorzugsweise druckluftbetätigtes Steuerventil (36) mit der Druckluftanlage (35) in Verbindung steht, dadurch gekennzeichnet, daß mindestens eine für die Außenanschlüsse vorgesehene Bohrung (37) zum unmittelbaren Anschluß eines Gefäßes (41) geeignet ist, wobei diese Bohrung (37) von einer konzentrisch angeordneten Nut (38) umgeben ist, in die ein das aufgesetzte Gefäß (41) abdichtender Dichtungsring (39) eingelegt ist.

2. Ventil nach Anspruch 1, bei Verwendung als Ablaufventil, dadurch gekennzeichnet, daß das unten offene Gefäß (41) einen Wulstrand (40) aufweist, der auf den Dichtungsring (39) aufsetzbar und mit einer eine entsprechende Öffnung aufweisende Platte (43) auf dem Gehäuse (1) befestigt ist.

3. Ventil nach Anspruch 1, dadurch gekennzeichnet, daß das Gefäß der Zylinder einer Dosierspritze ist, welcher mit Hilfe von Distanzbolzen auf dem Gehäuse (1) befestigbar ist.

4. Ventil nach Anspruch 1 oder 2, dadurch gekennzeichnet, daß am Gehäuse (1) der Stator eines Rührmotors (54) befestigbar ist, der über eine magnetische Kupplung (55) ein ferromagnetisches Rührelement (56) im Inneren des Gefäßes antreibt.

**Claims**

1. Pneumatically operated valve for the attachment to devices which serve for the chemical analysis, wherein two pistons (18, 19) actuate a slide (8) which is arranged in the direction of pressure and which slides on a pressure plate (3) which is provided with bores (4a, 4b) which run substantially at right angles to the sliding surface and which at the slide end, can be connected to one another by means of at least one appropriately arranged groove (9) in the slide and which on the other side, are connected to inlet or outlet connection means (7), and wherein on the side facing away from the slide, the bores (4a, 4b) in the pressure plate (3) are connected to bores for the outer connections in the housing by means of a seal (5), and wherein the pistons (18, 19) having different diameters are arranged on both sides of the slide (8), where the piston (19) having the smaller diameter is permanently fed with compressed air from a compressed air system (35), whereas the piston (18) having the larger diameter is connected via a preferably pneumatically operated control valve (36) to the compressed air system (35) in order to control the movement of the slide, characterised in that at least one bore (37), which is provided for the outer connections is suitable for the direct connection of a vessel (41), where this bore (37) is surrounded by a concentrically arranged groove (38), into which a sealing ring (39), which seals the attached vessel (41), is inserted.

2. Valve as claimed in claim 1, for use as relief valve, characterised in that the vessel (41), which is open at the base, has a beaded edge (40) which can be attached to the sealing ring (39) and can be secured to the housing (1) by means of a plate (43) having an appropriate opening.

3. Valve as claimed in claim 1, characterised in that the vessel of the cylinders is a dosing injector which can be mounted on the housing (1) with the aid of distance bolts.

4. Valve as claimed in claim 1 or 2, characterised in that the stator of an agitating motor (54) can be secured to the housing (1), which agitating motor actuates a ferromagnetic agitating element (56) inside the vessel by means of a magnetic coupling (55).

## Revendications

1. Valve actionnée par de l'air comprimé, pour le montage sur des appareils servant à l'analyse chimique, dans laquelle deux pistons (18, 19) commandent un coulisseau disposé dans la direction de la pression et qui glisse sur une plaque de pression (3) qui est pourvue de perçages (4a, 4b) s'étendant sensiblement suivant une direction perpendiculaire à la surface de glissement, qui sont susceptibles, du côté du coulisseau, d'être reliés entre eux dans le coulisseau (8) par au moins une gorge (9) disposée de façon correspondante et qui sont en liaison, sur l'autre côté avec des embouts d'admission et d'évacuation (7) les perçages (4a, 4b) ménagés dans la plaque de pression (3) étant en liaison, du côté éloigné du coulisseau et par l'intermédiaire d'une garniture d'étanchéité (5), avec des perçages pour des raccords extérieurs dans le boîtier, et dans laquelle de part et d'autre du coulisseau (8) les pistons (18, 19) sont disposés avec des diamètres différents, le piston (19) de plus petit diamètre étant chargé en permanence avec de l'air comprimé provenant d'une installation à air comprimé (35), alors que le piston (18) est en liaison, pour la commande du mouvement du coulisseau, avec l'installation à air comprimé (35) par l'intermédiaire d'une valve de commande (36) actionnée, de préférence, par de l'air comprimé, caractérisée par le fait qu'au moins un perçage (37) prévu pour les raccords extérieurs est approprié pour le raccordement direct d'un récipient (41), ledit perçage (37) étant entouré d'une gorge (38) dans laquelle est placée une bague d'étanchéité (39) assurant l'étanchéité du récipient (41) mis en place.

2. Valve selon la revendication 1, dans le cas de l'utilisation comme valve de vidange, caractérisée par le fait que le récipient (41) ouvert dans le bas, comporte un bourrelet périphérique (40) susceptible d'être placé sur la bague d'étanchéité (39) et est susceptible d'être fixé sur le boîtier (1) avec une plaque (43) comportant une ouverture correspondante.

3. Valve selon la revendication 1, caractérisée par le fait que le récipient est le cylindre d'une seringue de dosage qui est susceptible d'être fixée au boîtier (1) à l'aide de boulons formant entretoise.

4. Valve selon la revendication 1 ou 2, caractérisée par le fait que sur le boîtier (1) est susceptible d'être fixé le stator d'un moteur-agitateur (54) qui entraîne, par l'intermédiaire d'un accouplement magnétique (55), un agitateur (56) en un matériau ferromagnétique disposé à l'inteérieur du récipient.

FIG 1

FIG 2

FIG 3

FIG 4

FIG 7

FIG 8

FIG 9

# FIG 5

# FIG 6